# EUROPÄISCHE PATENTANMELDUNG

(11) **EP 3 034 780 A1**
(43) Veröffentlichungstag der Anmeldung: **22.06.2016**
(21) Anmeldenummer: 15200286.1
(22) Anmeldetag: 15.12.2015
(51) Int. Cl.: F01C 21/10, F04C 2/10, F04C 14/22, F04C 2/344

(54) **ROTATIONSPUMPE MIT KOMPAKTER STELLSTRUKTUR ZUR VERSTELLUNG DES FÖRDERVOLUMENS**

(30) Priorität: 17.12.2014 DE 202014106121 U
(71) Anmelder: Schwäbische Hüttenwerke Automotive GmbH, 73433 Aalen-Wasseralfingen (DE)
(72) Erfinder: Braasch, Holger, 88630 Pfullendorf (DE)
(74) Vertreter: Schwabe - Sandmair - Marx

(57) **Zusammenfassung**

Die Offenbarung betrifft eine Rotationspumpe mit verstellbarem spezifischen Fördervolumen, vorzugsweise Flügelpumpe, die Rotationspumpe umfassend:
(a) ein Gehäuse (1) mit einer Förderkammer (2), in die ein Einlass (3) und ein Auslass (4) für ein Fluid münden,
(b) einen in der Förderkammer (2) um eine Drehachse (R) drehbaren Förderrotor (10),
(c) eine den Förderrotor (10) umgebende Stellstruktur (20), die mit dem Förderrotor (10) Förderzellen (9) bildet, um das Fluid vom Einlass (3) zum Auslass (4) zu fördern, und zur Ausübung einer das spezifische Fördervolumen der Rotationspumpe verstellenden Stellbewegung relativ zum Förderrotor (10) in eine erste Stellrichtung und der ersten Stellrichtung entgegen in eine zweite Stellrichtung beweglich, vorzugsweise rotatorisch beweglich ist,
(d) eine Federeinrichtung (5), die zur Ausübung einer auf die Stellstruktur (20) in die erste Stellrichtung wirkenden Federkraft (F) in einem Federwiderlager (22) der Stellstruktur (20) abgestützt ist,
(e) eine Stelldruckkammer (6) zur Beaufschlagung der Stellstruktur (20) mit einem der Federkraft (F) entgegenwirkenden Stelldruck eines Stellfluids,
(f) und einen relativ zum Gehäuse (1) unbeweglichen Gehäuseanschlag (8), der eine Bewegung der Stellstruktur (20) in wenigstens eine der Stellrichtungen durch Anschlagkontakt mit der Stellstruktur (20) begrenzt,
(g) wobei die Stellstruktur (20) an einer dem Förderrotor (10) abgewandten Umfangswand eine radiale Vertiefung (25) und in der Vertiefung (25) einen Gegenanschlag (26), der in die erste Stellrichtung in den Anschlagkontakt mit dem Gehäuseanschlag (8) gelangt, und/oder einen Gegenanschlag (27), der in die zweite Stellrichtung in den Anschlagkontakt mit dem Gehäuseanschlag (8) gelangt, aufweist.

## Beschreibung

Die Erfindung betrifft eine Rotationspumpe mit einem Förderrotor und einer Stellstruktur, die zur Verstellung des spezifischen Fördervolumens der Rotationspumpe relativ zu einem Pumpengehäuse und dem Förderrotor rotatorisch beweglich ist.

Rotationspumpen, wie die Erfindung sie betrifft, sind beispielsweise aus der EP 0 846 861 B1 und der US 8,814,544 B2 bekannt. Derartige Rotationspumpen weisen einen Förderrotor und eine den Förderrotor umgebende Stellstruktur auf. Der Förderrotor bildet mit der Stellstruktur Förderzellen, in denen ein Fluid von einer Niederdruckseite zu einer Hochdruckseite der Pumpe gefördert wird. Die Stellstruktur ist relativ zum Pumpengehäuse und dem Förderrotor beweglich, so dass eine Exzentrizität zwischen Förderrotor und Stellstruktur und in der Folge ein spezifisches Fördervolumen der Rotationspumpe verstellbar sind. Zur Verstellung wirken auf die Stellstruktur die Federkraft einer Federeinrichtung und der Federkraft entgegen ein Fluidstelldruck. Die Position der Stellstruktur ergibt sich entsprechend dem Gleichgewicht aus Federkraft und einer vom Stelldruck erzeugten Stelldruckkraft. Die rotatorisch beweglichen Stellstrukturen weisen einen am äußeren Umfang der jeweiligen Stellstruktur abragenden Fortsatz auf, an dem die Federeinrichtung abgestützt ist. Die Federeinrichtung erstreckt sich daher tangential seitlich neben der Stellstruktur.

Es ist eine Aufgabe der Erfindung, den Bauraum und/oder das Gewicht von Rotationspumpen der beschriebenen Art zu reduzieren.

Die Erfindung geht von einer Rotationspumpe, vorzugsweise eine Flügelpumpe aus, die ein Gehäuse mit einer Förderkammer, einen in der Förderkammer um eine Drehachse drehbaren Förderrotor und eine den Förderrotor umgebende Stellstruktur aufweist. Die Förderkammer kann bereits allein vom Gehäuse und der Stellstruktur umgrenzt und somit bestimmt werden. Grundsätzlich ist jedoch denkbar, dass die Förderkammer erst mittels einer oder mehreren weiteren Strukturen begrenzt wird. Der Förderrotor und die Stellstruktur bilden Förderzellen, in denen das Fluid durch Drehen des Förderrotors von einem in die Förderkammer mündenden Einlass zu einem in die Förderkammer mündenden Auslass gefördert werden kann, indem sich die Förderzellen wie von Innenzahnringpumpen und Pendelschieberpumpen und insbesondere Flügelpumpen bekannt auf einer Niederdruckseite der Förderkammer vergrößern und auf einer Hochdruckseite der Förderkammer wieder verkleinern. Um das spezifische Fördervolumen verstellen zu können, ist die Stellstruktur relativ zu dem Förderrotor und dem Gehäuse in eine erste Stellrichtung und dieser entgegen in eine zweite Stellrichtung rotatorisch hin und her beweglich. Die Stellstruktur kann relativ zum Gehäuse um eine Polachse schwenkbeweglich angeordnet sein, um das spezifische Fördervolumen verstellen zu können. Sie kann um eine ortsveränderliche Polachse schwenkbar sein, z.B. an einer Führungskurve abrollen oder abwälzen, wie dies aus der EP 0 846 861 B1 bekannt ist. Bevorzugt ist die Polachse jedoch eine relativ zum Gehäuse ortsfeste Schwenkachse.

Der Förderrotor umfasst eine Rotorstruktur. Die Rotorstruktur kann bereits den Förderrotor bilden, der in derartigen Ausführungen einteilig wäre. Eine einteilige Ausbildung ist beispielsweise bei Innenzahnringpumpen gegeben. Grundsätzlich ist auch denkbar, dass eine Flügelpumpe einen einteiligen Förderrotor aufweist, so dass die Begriffe "Förderrotor" und "Rotorstruktur" das gleiche Teil bezeichnen können. Ein als einteiliges Flügelrad gebildeter Förderrotor kann beispielsweise elastisch nachgiebige Flügel aufweisen, die formelastisch und/oder materialelastisch nachgeben, um die sich vergrößernden und wieder verkleinernden Förderzellen bilden zu können. Bevorzugter ist ein als Flügelrad gebildeter Förderrotor jedoch mehrteilig und weist die in derartigen Ausführungen zentrale Rotorstruktur und von dieser nach außen abragend einen oder mehrere Flügel auf, der oder die jeweils im Ganzen relativ zur Rotorstruktur beweglich ist oder sind. Der oder die Flügel können rotatorisch beweglich mit der Rotorstruktur verbunden sein. Vorzugsweise lagert die Rotorstruktur den einzigen Flügel oder die mehreren Flügel jedoch jeweils translatorisch gleitbeweglich. Die Rotationspumpe kann insbesondere eine Flügelzellenpumpe sein. Bevorzugte Beispiele für ein- und mehrflügelige Rotationspumpen finden sich in der US 8,814,544 B2 und der DE 10 2008 036 273 B4, wobei letztgenannte Druckschrift nur eine Rotationspumpe offenbart, die in Bezug auf das spezifische Fördervolumen nicht verstellbar ist und auf die nur wegen der Bauart des Förderrotors hingewiesen wird.

Zur Ausübung einer auf die Stellstruktur in die erste Stellrichtung wirkenden Federkraft umfasst die Rotationspumpe eine Federeinrichtung, die in einem Federwiderlager der Stellstruktur abgestützt ist. Ferner ist im Gehäuse der Rotationspumpe eine Stelldruckkammer zur Beaufschlagung der Stellstruktur mit einem der Federkraft entgegenwirkenden Stelldruck eines Stellfluids gebildet. Der Stelldruck ist vorzugsweise von dem von der Rotationspumpe erzeugten Förderdruck abhängig. Das Stellfluid kann ein von dem von der Rotationspumpe zu fördernden Fluid separates Stellfluid sein. Bevorzugt ist die Stelldruckkammer jedoch mit einer Hochdruckseite der Rotationspumpe verbunden, indem auf der Hochdruckseite eine Verbindungsleitung abzweigt und in die Stelldruckkammer mündet. Die Verbindung von Hochdruckseite und Stelldruckkammer kann vollständig im Gehäuse der Rotationspumpe gebildet sein. Das Stellfluid kann aber auch auf der Hochdruckseite stromabwärts vom Gehäuse der Rotationspumpe abgezweigt und in die Stelldruckkammer zurückgeführt werden. In derartigen Ausführungen wird das Stellfluid vorzugsweise stromabwärts von einem auf der Hochdruckseite angeordneten Fluidfilter und stromaufwärts von einem mit dem Fluid zu versorgenden Aggregat abgezweigt. Die Position der Stellstruktur und somit das spezifische Fördervolumen der Rotationspumpe stellt sich im Gleichgewicht von Federkraft und einer vom Stellfluid in der Stelldruckkammer erzeugten Stelldruckkraft ein. Die Stellstruktur bildet in bevorzugten Ausführungen an ihrem vom Förderrotor radial abgewandten Umfang eine Kammerwand der Stelldruckkammer, so dass das Stellfluid unmittelbar auf die Stellstruktur wirkt.

In bevorzugten Ausführungen überlappt das Federwiderlager in axialer Sicht auf den Förderrotor in orthogonaler Richtung zur Federkraft und somit auch in Bezug auf eine die Polachse mit der Drehachse des Förderrotors verbindende gerade Linie mit dem Förderrotor. Im Vergleich mit aus dem Stand der Technik bekannten Rotationspumpen mit rotatorisch beweglicher Stellstruktur, bei denen die Federeinrichtung in axialer Sicht auf den Förderrotor in Richtung der Federkraft mit dem Förderrotor überlappt und somit orthogonal zur Federkraft seitlich neben dem Förderrotor angeordnet ist, wird durch die bevorzugte Anordnung des Federwiderlagers und entsprechende Anordnung der Federeinrichtung die orthogonal zur Federkraft gemessene Breite der Rotationspumpe verringert. Es entfällt der seitliche Fortsatz, auf den bei den bekannten Rotationspumpen die Federkraft wirkt. Bezogen auf die Polachse wirkt die Federkraft bei der erfindungsgemäßen Rotationspumpe mit einem kürzeren Hebelarm auf die Stellstruktur. Die Stellstruktur kann über ihren äußeren Umfang gesehen der kompakten Kreisform stärker angenähert sein, als dies bei den herkömmlichen Stellstrukturen möglich ist.

Die Federeinrichtung kann in vorteilhaften Ausführungen auf der Niederdruckseite der Rotationspumpe angeordnet sein. So kann sie sich über zumindest einen überwiegenden Teil ihrer in Richtung der Federkraft gemessenen Länge in einem Zufluss erstrecken, der im Pumpengehäuse einen Einlass des Gehäuses mit dem in die Förderkammer mündenden Einlass verbindet. In derartigen Ausführungen ist der Zufluss an der Seite der Stellstruktur angeordnet, an der sich auch das Federwiderlager befindet. Der Zufluss kann insbesondere so erstreckt sein, dass er das Fluid zumindest im Wesentlichen in Richtung der Federkraft zum Einlass der Förderkammer leitet.

Für die Kompaktheit der Rotationspumpe ist förderlich, wenn die Federkraft die Drehachse des Förderrotors in der axialen Sicht auf den Förderrotor innerhalb eines den Förderrotor umgebenden Innenumfangs der Stellstruktur kreuzt, sich also in gerader Verlängerung in einem Abstand neben der Drehachse des Förderrotors erstreckt und dabei eine Sekante des Innenumfangs der Stellstruktur bildet. Das Federwiderlager und die Federeinrichtung können auch so angeordnet sein, dass die Federkraft in gerader Verlängerung die Drehachse des Förderrotors schneidet. Zweckmäßigerweise kreuzt die Federkraft jedoch die Drehachse des Förderrotors an einer von der Polachse der Stellstruktur abgewandten Seite.

Von Vorteil ist, wenn das Federwiderlager der Stellstruktur in der axialen Sicht auf den Förderrotor orthogonal zur Federkraft mit dem Einlass der Förderkammer überlappt. Die Überlappung ist vorzugsweise derart, dass die Federkraft in der axialen Sicht in gerader Verlängerung durch den Einlass weist. Der Einlass der Förderkammer kann sich insbesondere in einer die Förderkammer axial begrenzenden Stirnfläche des Gehäuses erstrecken. Der Auslass der Förderkammer kann sich ebenfalls in einer die Förderkammer axial begrenzenden Stirnfläche des Gehäuses, bevorzugt in der gleichen Stirnfläche, erstrecken.

Die Beweglichkeit der Stellstruktur kann in wenigstens eine der zwei Stellrichtungen durch einen relativ zum Gehäuse unbeweglichen Gehäuseanschlag begrenzt werden. Bevorzugter wird die Beweglichkeit sowohl in die erste als auch in die zweite Stellrichtung durch Anschlagkontakt begrenzt.

Die Stellstruktur bildet wenigstens einen Gegenanschlag für den Gehäuseanschlag. Der wenigstens eine Gegenanschlag kann ein erster Gegenanschlag sein, der in die erste Stellrichtung in Anschlagkontakt mit dem Gehäuseanschlag gelangt und somit die Beweglichkeit der Stellstruktur in die erste Stellrichtung begrenzt. Stattdessen kann der wenigstens eine Gegenanschlag aber auch ein zweiter Gegenanschlag sein, der in die zweite Stellrichtung, also der Federkraft entgegen, in den Anschlagkontakt mit dem Gehäuseanschlag gelangt, um die Beweglichkeit der Stellstruktur in die zweite Stellrichtung zu begrenzen. In bevorzugten Ausführungen weist die Stellstruktur den ersten Gegenanschlag und den zweiten Gegenanschlag auf.

Um die in der axialen Sicht auf den Förderrotor orthogonal zur Federkraft gemessene Breite der Rotationspumpe gering zu halten, kann die Stellstruktur an ihrem dem Förderrotor abgewandten äußeren Umfang eine Vertiefung aufweisen und der wenigstens eine Gegenanschlag in der Vertiefung vorgesehen sein. Weist die Stellstruktur den ersten Gegenanschlag und den zweiten Gegenanschlag auf, sind vorzugsweise beide Gegenanschläge in der Vertiefung vorgesehen. Die Vertiefung kann in Umfangsrichtung an einer Seite an einen Umfangsbereich der Stellstruktur grenzen, mit dem die Stellstruktur einen Dichtspalt mit einem zugewandt gegenüberliegenden Innenumfangsbereich des Gehäuses bildet. Der den Dichtspalt mit dem Gehäuse bildende Umfangsbereich der Stellstruktur ist zweckmäßigerweise ein kreiszylindrischer Flächenbereich mit einem auf die Polachse gemessenen Kreisradius. In diesem Umfangsflächenbereich kann zur besseren Abdichtung der Stelldruckkammer ein Dichtelement angeordnet, beispielsweise in einer Ausnehmung des betreffenden Umfangsbereichs der Stellstruktur aufgenommen sein.

Der Gehäuseanschlag kann von einem der Stellstruktur zugewandten Innenumfang des Gehäuses nach innen in die Vertiefung der Stellstruktur hineinragen. In bevorzugten alternativen Ausführungen kann der Gehäuseanschlag von einer der Stellstruktur axial zugewandten Stirnfläche des Gehäuses in axialer Richtung auf- und in die Vertiefung hineinragen. Der Gehäuseanschlag kann unmittelbar bei einer Urformung des Gehäuses mit geformt oder separat von dem Gehäuse geformt und mit diesem gefügt sein. Ein separates Formen und Fügen bietet sich insbesondere für Ausführungen an, in denen der Gehäuseanschlag von besagter Stirnfläche des Gehäuses abragt und in die Vertiefung axial hineinragt. Der Gehäuseanschlag kann in derartigen Ausführungen als Bolzen oder Pin geformt und in eine axiale Vertiefung in der Stirnfläche des Gehäuses eingesetzt und gefügt sein.

Das Gehäuse kann ein Gehäuseteil mit einer die Stellstruktur umgebenden Umfangswand und einen Deckel umfassen, der die Umfangswand an einer Stirnseite schließt. Der Gehäuseanschlag kann am Deckel oder alternativ am die Umfangswand aufweisenden Gehäuseteil vorgesehen sein, vorzugsweise von einer Stirnfläche des Deckels oder des genannten anderen Gehäuseteils axial ab- und in die Vertiefung hineinragen.

Die Ausbildung des wenigstens einen Gegenanschlags in einer radialen Vertiefung am äußeren Umfang der Stellstruktur ist nicht nur in Kombination mit der überlappenden Anordnung von Federwiderlager und Förderrotor gemäß dem nachfolgend noch beschriebenen Aspekt 1, sondern auch für sich alleine, losgelöst von der Überlappung gemäß Aspekt 1 von Vorteil. Das Merkmal der Bildung eines ersten Gegenanschlags und/oder eines zweiten Gegenanschlags in einer radialen Vertiefung am Umfang der Stellstruktur ist zwar besonders vorteilhaft für eine rotatorisch bewegliche Stellstruktur, ist andererseits jedoch auf die rotatorische Stellbeweglichkeit nicht beschränkt. Bei Verwirklichung des Merkmals wird Bauraum auch bei Rotationspumpen mit translatorisch stellbeweglicher Stellstruktur eingespart.

Einlass und Auslass der Förderkammer sind in bevorzugten Ausführungen so angeordnet, dass das durch die Förderkammer geförderte Fluid auf der Hochdruckseite der Förderkammer, die den Auslass umfasst, auf die Stellstruktur von innen einen Fluiddruck ausübt, der die Federkraft der Federeinrichtung unterstützt. Der Fluiddruck auf der Hochdruckseite der Förderkammer - dies ist der Bereich der Förderkammer, in dem sich die Förderzellen verkleinern - wirkt in derartigen Ausführungen dem vom Stellfluid in der Stelldruckkammer auf die Stellstruktur ausgeübten Stelldruck entgegen. Die Federkraft kann hierdurch verringert und die Federeinrichtung entsprechend verkleinert und/oder feinfühliger bzw. weicher ausgelegt werden.

Die Federeinrichtung ist vorteilhafterweise dafür eingerichtet, dass die Federkraft in Richtung auf ein maximales spezifisches Fördervolumen der Rotationspumpe wirkt. Dies ist insbesondere dann von Vorteil, wenn der Stelldruck mit dem Druck auf der Hochdruckseite der Rotationspumpe zu- und abnimmt und mittels eines Steuer- oder Regelventils gesteuert oder geregelt wird. Dass die Federkraft in Richtung Maximalförderung auf die Stellstruktur wirkt, verleiht der Rotationspumpe eine Fail-Safe-Eigenschaft.

Die Rotationspumpe kann eine Pumpe zur Förderung eines Gases, insbesondere Luft, sein. Bevorzugter handelt es sich um eine Rotationspumpe zur Förderung einer Flüssigkeit, wie etwa Motorschmieröl oder Getriebeöl. Ein bevorzugtes Anwendungsgebiet ist der Fahrzeugbau. So kann die Rotationspumpe insbesondere eine Vakuumpumpe, Motorschmierölpumpe oder Getriebeölpumpe eines Kraftfahrzeugs sein. Bevorzugt wird die Rotationspumpe von einem Antriebsmotor des Kraftfahrzeugs mechanisch angetrieben. Bedarf an einer gesteuerten oder geregelten Verstellbarkeit des spezifischen Fördervolumens besteht insbesondere in Anwendungen, in denen die Rotationspumpe in fester Drehzahlbeziehung von einem Antriebsmotor eines Kraftfahrzeugs, beispielsweise der Kurbelwelle eines Verbrennungsmotors des Kraftfahrzeugs, angetrieben wird. So kann der Förderrotor rotatorisch unbeweglich direkt mit einer Kurbelwelle eines Verbrennungsmotors oder aber über ein Getriebe, beispielsweise ein Zugmittel- oder Zahnradgetriebe, mit einer Kurbelwelle eines Verbrennungsmotors verbunden sein. In einfachen Ausführungen umfasst die Rotationspumpe nur einen einzigen Förderrotor. Grundsätzlich kann die Rotationspumpe jedoch auch zwei oder noch mehr Förderrotoren umfassen und die Stellstruktur mehrere Förderrotoren oder jeweils eine Stellstruktur jeweils einen der Förderrotoren umgeben. Sind mehrere Stellstrukturen vorhanden, ist wenigstens eine dieser Stellstrukturen hinsichtlich des Federwiderlagers erfindungsgemäß gebildet.

Vorteilhafte Merkmale werden auch in den Unteransprüchen und den Kombinationen der Unteransprüche beschrieben.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf ein nachfolgend in Figuren illustriertes Ausführungsbeispiel. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.
Aspekt 1. Rotationspumpe mit verstellbarem spezifischen Fördervolumen, vorzugsweise Flügelpumpe, die Rotationspumpe umfassend:
   (a) ein Gehäuse (1) mit einer Förderkammer (2), in die ein Einlass (3) und ein Auslass (4) für ein Fluid münden,
   (b) einen in der Förderkammer (2) um eine Drehachse (R) drehbaren Förderrotor (10),
   (c) eine den Förderrotor (10) umgebende Stellstruktur (20), die mit dem Förderrotor (10) Förderzellen (9) bildet, um das Fluid vom Einlass (3) zum Auslass (4) zu fördern, und zur Ausübung einer das spezifische Fördervolumen der Rotationspumpe verstellenden Stellbewegung relativ zum Förderrotor (10) in eine erste Stellrichtung und der ersten Stellrichtung entgegen in eine zweite Stellrichtung rotatorisch beweglich ist,
   (d) eine Federeinrichtung (5), die zur Ausübung einer auf die Stellstruktur (20) in die erste Stellrichtung wirkenden Federkraft (F) in einem Federwiderlager (22) der Stellstruktur (20) abgestützt ist,
   (e) und eine Stelldruckkammer (6) zur Beaufschlagung der Stellstruktur (20) mit einem der Federkraft (F) entgegenwirkenden Stelldruck eines Stellfluids,
   (f) wobei das Federwiderlager (22) in axialer Sicht auf den Förderrotor (10) orthogonal zur Federkraft (F) mit dem Förderrotor (10) überlappt.
Aspekt 2. Rotationspumpe nach dem vorhergehenden Aspekt, ferner umfassend einen relativ zum Gehäuse (1) unbeweglichen Gehäuseanschlag (8), der eine Bewegung der Stellstruktur (20) in wenigstens eine der Stellrichtungen durch Anschlagkontakt mit der Stellstruktur (20) begrenzt.
Aspekt 3. Rotationspumpe nach dem vorhergehenden Aspekt, wobei die Stellstruktur (20) an einer dem Förderrotor (10) abgewandten Umfangswand eine radiale Vertiefung (25) und in der Vertiefung (25) einen Gegenanschlag (26) aufweist, der in die erste Stellrichtung in den Anschlagkontakt mit dem Gehäuseanschlag (8) gelangt.
Aspekt 4. Rotationspumpe nach einem der zwei unmittelbar vorhergehenden Aspekte, wobei die Stellstruktur (20) an einer dem Förderrotor (10) abgewandten Umfangswand eine radiale Vertiefung (25) und in der Vertiefung (25) einen Gegenanschlag (27) aufweist, der in die zweite Stellrichtung in den Anschlagkontakt mit dem Gehäuseanschlag (8) gelangt.
Aspekt 5. Rotationspumpe mit verstellbarem spezifischen Fördervolumen, vorzugsweise Flügelpumpe, die Rotationspumpe umfassend:
   (a) ein Gehäuse (1) mit einer Förderkammer (2), in die ein Einlass (3) und ein Auslass (4) für ein Fluid münden,
   (b) einen in der Förderkammer (2) um eine Drehachse (R) drehbaren Förderrotor (10),
   (c) eine den Förderrotor (10) umgebende Stellstruktur (20), die mit dem Förderrotor (10) Förderzellen (9) bildet, um das Fluid vom Einlass (3) zum Auslass (4) zu fördern, und zur Ausübung einer das spezifische Fördervolumen der Rotationspumpe verstellenden Stellbewegung relativ zum Förderrotor (10) in eine erste Stellrichtung und der ersten Stellrichtung entgegen in eine zweite Stellrichtung beweglich, vorzugsweise rotatorisch beweglich ist,
   (d) eine Federeinrichtung (5), die zur Ausübung einer auf die Stellstruktur (20) in die erste Stellrichtung wirkenden Federkraft (F) in einem Federwiderlager (22) der Stellstruktur (20) abgestützt ist,
   (e) eine Stelldruckkammer (6) zur Beaufschlagung der Stellstruktur (20) mit einem der Federkraft (F) entgegenwirkenden Stelldruck eines Stellfluids,
   (f) und einen relativ zum Gehäuse (1) unbeweglichen Gehäuseanschlag (8), der eine Bewegung der Stellstruktur (20) in wenigstens eine der Stellrichtungen durch Anschlagkontakt mit der Stellstruktur (20) begrenzt,
   (g) wobei die Stellstruktur (20) an einer dem Förderrotor (10) abgewandten Umfangswand eine radiale Vertiefung (25) und in der Vertiefung (25) einen Gegenanschlag (26), der in die erste Stellrichtung in den Anschlagkontakt mit dem Gehäuseanschlag (8) gelangt, und/oder einen Gegenanschlag (27), der in die zweite Stellrichtung in den Anschlagkontakt mit dem Gehäuseanschlag (8) gelangt, aufweist.
Aspekt 6. Rotationspumpe nach dem vorhergehenden Aspekt, wobei das Federwiderlager (22) in axialer Sicht auf den Förderrotor (10) orthogonal zur Federkraft (F) mit dem Förderrotor (10) überlappt.
Aspekt 7. Rotationspumpe nach einem der vier unmittelbar vorhergehenden Aspekte, wobei eine in Bezug auf die durch den Anschlagkontakt begrenzte Stellbewegung nachlaufende Wand der Vertiefung (25) den Gegenanschlag (26, 27) bildet.
Aspekt 8. Rotationspumpe nach dem vorhergehenden Aspekt, wobei die Wand im Anschlagkontakt in einem Wandbereich, der den Gegenanschlag (26; 27) bildet, mit einer radial zur Drehachse (R) des Förderrotors (10) und/oder einer radial zu einer Schwenkachse der Stellstruktur (20) erstreckten Tangentialebene des Wandbereichs einen Winkel von höchstens 40°, vorzugsweise höchstens 30°, einschließt.
Aspekt 9. Rotationspumpe nach einem der Aspekte 3 bis 8, wobei die Vertiefung (25) als axiale Nut am dem Förderrotor (10) radial abgewandten Umfang der Stellstruktur (20) geformt ist.
Aspekt 10. Rotationspumpe nach einem der Aspekte 3 bis 9, wobei die Vertiefung (25) an einem äußeren Umfang der Stellstruktur (20) gelegen und in Richtung auf eine die Stellstruktur (20) umgebende Innenumfangsfläche des Gehäuses (1) offen ist.
Aspekt 11. Rotationspumpe nach einem der Aspekte 3 bis 10, wobei die Stellstruktur (20) mit einer Innenumfangsfläche des Gehäuses (1) einen Dichtspalt (7) für die Stelldruckkammer (6) bildet und die Vertiefung (25) in Umfangsrichtung an den Dichtspalt (7) grenzt.
Aspekt 12. Rotationspumpe nach dem vorhergehenden Aspekt, wobei sich die Vertiefung (25) in Umfangsrichtung vom Dichtspalt (7) bis zu einem weiteren Dichtspalt erstreckt, den die Stellstruktur (20) mit der Innenumfangsfläche des Gehäuses (1) bildet.
Aspekt 13. Rotationspumpe nach einem der Aspekte 3 bis 12, wobei die Vertiefung (25) in Bezug auf die erste Stellrichtung ein vorlaufendes Ende und ein nachlaufendes Ende aufweist und die Stellstruktur (20) an einem äußeren Umfang, der einer Innenumfangsfläche des Gehäuses (1) gegenüberliegt, am vorlaufenden Ende und am nachlaufenden Ende von der Innenumfangsfläche aus gesehen abfällt, um die Vertiefung (25) zu bilden.
Aspekt 14. Rotationspumpe nach einem der vorhergehenden Aspekte, wobei eine in Umfangsrichtung der Stellstruktur (20) vom vorlaufenden Ende bis zum nachlaufenden Ende gemessene Länge der Vertiefung (25) so klein ist, dass eine an die Stellstruktur (20) angelegte gerade Linie die Vertiefung (25) über ihre gesamte Länge überdeckt.
Aspekt 15. Rotationspumpe nach einem der Aspekte 3 bis14, wobei die Stellstruktur (20) in der Vertiefung (25) den Gegenanschlag (26), der in die erste Stellrichtung in den Anschlagkontakt mit dem in die Vertiefung ragenden Gehäuseanschlag (8) gelangt, und einen Gegenanschlag (27), der in die zweite Stellrichtung in den Anschlagkontakt mit dem in die Vertiefung ragenden Gehäuseanschlag (8) oder einem in die Vertiefung ragenden weiteren Gehäuseanschlag gelangt, aufweist
Aspekt 16. Rotationspumpe nach einem der Aspekte 2 bis 15, wobei der Gehäuseanschlag (8) von einer der Stellstruktur (20) zugewandten Stirnfläche des Gehäuses (1) axial abragt, vorzugsweise stift- oder bolzenförmig.
Aspekt 17. Rotationspumpe nach einem der vorhergehenden Aspekte, wobei die Federkraft (F) die Drehachse (R) des Förderrotors (10) in axialer Sicht auf den Förderrotor (10) innerhalb eines dem Förderrotor (10) zugewandten Innenumfangs der Stellstruktur (20) kreuzt oder schneidet.
Aspekt 18. Rotationspumpe nach einem der vorhergehenden Aspekte, wobei die Federeinrichtung (5) ein Federglied, vorzugsweise eine Schraubendruckfeder, umfasst, das in Richtung auf die Förderkammer (2) und exzentrisch zur Drehachse (R) des Förderrotors (10) auf die Stellstruktur (20) wirkt.
Aspekt 19. Rotationspumpe nach einem der vorhergehenden Aspekte, wobei die Federeinrichtung (5) mit dem Förderrotor (10) parallel zur Federkraft (F) keine Überlappung aufweist.
Aspekt 20. Rotationspumpe nach einem der vorhergehenden Aspekte, wobei die Stellstruktur (20) um eine Polachse (P), vorzugsweise eine relativ zum Gehäuse (1) ortsfeste Schwenkachse, in die erste Stellrichtung und die zweite Stellrichtung hin und her rotatorisch beweglich, vorzugsweise schwenkbeweglich ist.
Aspekt 21. Rotationspumpe nach dem vorhergehenden Aspekt, wobei die Federkraft (F) die Drehachse (R) des Förderrotors (10) an einer von der Polachse (P) abgewandten Seite kreuzt.
Aspekt 22. Rotationspumpe nach einem der vorhergehenden Aspekte, wobei die Stellstruktur (20) in einem Drehgelenk (1, 20) relativ zum Gehäuse (1) um eine relativ zum Gehäuse (1) ortsfeste Schwenkachse (P) in die erste Stellrichtung und die zweite Stellrichtung hin und her schwenkbeweglich ist.
Aspekt 23. Rotationspumpe nach dem vorhergehenden Aspekt, wobei die Stellstruktur (20) und das Gehäuse (1) jeweils unmittelbar ein Gelenkelement des Drehgelenks (1, 20) bilden.
Aspekt 24. Rotationspumpe nach einem der zwei vorhergehenden Aspekte, wobei die Stellstruktur (20) an einem vom Förderrotor (10) abgewandten äußeren Umfang eine Lagerfläche (21) aufweist und im Bereich der Lagerfläche (21) mit einer zugewandten Innenumfangsfläche des Gehäuses (1) in einem Gleitkontakt ist und die Stellstruktur (20) mit dem Gehäuse (1) in diesem Gleitkontakt das Drehgelenk (1, 20) bildet.
Aspekt 25. Rotationspumpe nach einem der vorhergehenden Aspekte, wobei das Federwiderlager (22) in axialer Sicht auf den Förderrotor (10) orthogonal zur Federkraft (F) mit dem Einlass (3) der Förderkammer (2) überlappt.
Aspekt 26. Rotationspumpe nach einem der vorhergehenden Aspekte, wobei das Gehäuse (1) einen Einlass für das zu fördernde Fluid in das Gehäuse (1) und einen Zufluss (9) aufweist, der den Einlass in das Gehäuse (1) mit dem Einlass (3) der Förderkammer (2) verbindet und in axialer Sicht auf den Förderrotor (10) orthogonal zur Federkraft (F) mit dem Förderrotor (10) überlappt, und wobei sich die Federeinrichtung (5) im Zufluss (9) erstreckt.
Aspekt 27. Rotationspumpe nach dem vorhergehenden Aspekt, wobei der Zufluss (9) das Fluid im Bereich der Federeinrichtung (5) in Richtung der Federkraft (F) leitet.
Aspekt 28. Rotationspumpe nach einem der zwei vorhergehenden Aspekte, wobei der Zufluss (9) das Fluid in Richtung der Federkraft (F) in den Einlass (3) der Förderkammer (2) leitet.
Aspekt 29. Rotationspumpe nach einem der vorhergehenden Aspekte, wobei die Rotationspumpe zur Versorgung eines Aggregats eines Kraftfahrzeugs mit dem Fluid verwendet und in fester Drehzahlbeziehung von einem Antriebsmotor des Fahrzeugs angetrieben wird.
Aspekt 30. Rotationspumpe nach einem der vorhergehenden Aspekte, wobei die Rotationspumpe eine Vakuumpumpe oder insbesondere eine Motorschmierölpumpe oder Getriebeölpumpe eines Antriebsverbrennungsmotors eines Kraftfahrzeugs ist.
Aspekt 31. Rotationspumpe nach einem der vorhergehenden Aspekte, wobei die Wirkrichtung der Federkraft (F) in axialer Sicht auf den Förderrotor (10) zwischen der Drehachse (R) des Förderrotors (10) und der Vertiefung (25) verläuft.
Aspekt 32. Rotationspumpe nach einem der vorhergehenden Aspekte, wobei die Wirkrichtung der Federkraft (F) in axialer Sicht auf den Förderrotor (10) zwischen einer Polachse (P) der Stellstruktur (20) und der Vertiefung (25) verläuft.
Aspekt 33. Rotationspumpe nach einem der vorhergehenden Aspekte, wobei eine Verbindungsgerade, welche in axialer Sicht auf den Förderrotor (10) die Drehachse (R) des Förderrotors (10) schneidet und durch die Vertiefung (25) verläuft, orthogonal zur Federkraft (F) weist.
Aspekt 34. Rotationspumpe nach einem der vorhergehenden Aspekte, wobei eine Verbindungsgerade, welche in axialer Sicht auf den Förderrotor (10) eine Polachse (P) der Stellstruktur (20), vorzugsweise auch die Drehachse (R) des Förderrotors (10), schneidet und durch die Vertiefung (25) verläuft, orthogonal zur Federkraft (F) weist.
Aspekt 35. Rotationspumpe nach einem der vorhergehenden Ansprüche, wobei eine Verbindungsgerade, die in axialer Sicht auf den Förderrotor (10) die Drehachse (R) des Förderrotors (10) und eine Polachse (P) der Stellstruktur (20) verbindet, durch die am Umfang der Stellstruktur (20) angeordnete Vertiefung (25) verläuft.
Aspekt 36. Rotationspumpe nach einem der vorhergehenden Aspekte, wobei die Wirkrichtung der Federkraft (F) durch die Stelldruckkammer (6) verläuft.

Nachfolgend wird ein Ausführungsbeispiel der Erfindung anhand von Figuren erläutert. Am Ausführungsbeispiel offenbarte Merkmale bilden jeweils einzeln und in jeder Merkmalskombination die Gegenstände der Ansprüche und der Aspekte und auch die vorstehend erläuterten Ausgestaltungen vorteilhaft weiter. Es zeigen:
- Figur 1: eine Rotationspumpe mit einer rotatorisch beweglichen Stellstruktur in einer Position für maximales Fördervolumen und
- Figur 2: die Rotationspumpe mit der Stellstruktur in einer Position für minimales Fördervolumen.

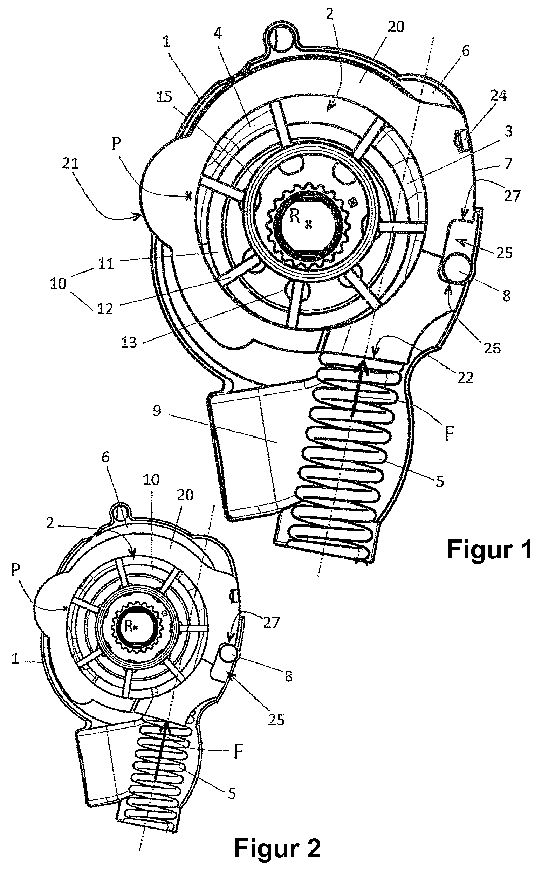

Figur 1 zeigt eine Rotationspumpe, beispielhaft in Flügelzellenbauart. Die Rotationspumpe ist in einer axialen Sicht auf einen Förderrotor 10 der Pumpe dargestellt. Die Pumpe umfasst ein Gehäuse 1, von dem in Figur 1 nur ein Gehäuseteil dargestellt ist, das eine Förderkammer 2, in welcher der Förderrotor 10 um eine Drehachse R drehbar angeordnet ist, und eine Stellstruktur 20 umgibt. Das Gehäuseteil umfasst ferner eine dem Förderrotor 10 axial zugewandte Stirnwand des Gehäuses 1, die in Figur 1 hinter dem Förderrotor 10 zu erkennen ist. Von einer Umfangswand des Gehäuseteils ist nur ein radial innerer Rand dargestellt. Ein Deckel des Gehäuses 1 ist abgenommen, so dass die Funktionskomponenten der Rotationspumpe erkennbar sind. Die Förderkammer 2 weist einen Einlass 3 und einen Auslass 4 für ein zu förderndes Fluid, beispielsweise Motorschmieröl, auf. Die Förderkammer 2 umfasst eine Niederdruckseite und eine Hochdruckseite. Bei einem Drehantrieb des Förderrotors 10, in Figur 1 gegen den Uhrzeigersinn, strömt Fluid durch den Einlass 3 auf der Niederdruckseite in die Förderkammer 2 und wird unter Erhöhung des Drucks auf der Hochdruckseite durch den Auslass 4 ausgestoßen und abgefördert.

Der Förderrotor 10 ist ein Flügelrad mit einer bezüglich der Drehachse R zentralen Rotorstruktur 11 und über den Umfang der Rotorstruktur 11 verteilt angeordneten Flügeln 12. Die Flügel 12 sind in zum äußeren Umfang der Rotorstruktur 11 offenen Schlitzen 13 der Rotorstruktur 11 in radialer oder zumindest im Wesentlichen radialer Richtung gleitend verschieblich geführt. Sie sind radial innen an einer Stützstruktur 15 abgestützt. Die Stützstruktur 15 ist relativ zur Rotorstruktur 11 beweglich, um Stellbewegungen der Stellstruktur 20 ausgleichen zu können.

Der Förderrotor 10 wird an seinem äußeren Umfang von der Stellstruktur 20 umgeben. Beim Drehantrieb des Förderrotors 10 gleiten dessen Flügel 12 über eine Innenumfangsfläche der Stellstruktur 20. Die Drehachse R des Förderrotors 10 ist zu einer parallelen zentralen Achse der Stellstruktur 20 exzentrisch angeordnet, so dass sich vom Förderrotor 10 und der Stellstruktur 20 gebildete Förderzellen bei Drehung des Förderrotors 10 auf der Niederdruckseite der Förderkammer 2 in Drehrichtung vergrößern und auf der Hochdruckseite wieder verkleinern. Aufgrund dieser mit der Drehzahl des Förderrotors 10 periodischen Vergrößerung und Verkleinerung der Förderzellen wird das Fluid von der Niederdruckseite zur Hochdruckseite und dort mit erhöhtem Druck durch den Auslass 4 gefördert.

Das pro Umdrehung des Förderrotors 10 geförderte Fluidvolumen, das sogenannte spezifische Fördervolumen, kann verstellt werden. Ist das Fluid eine Flüssigkeit und somit in guter Näherung inkompressibel, ist das absolute Fördervolumen der Drehzahl des Förderrotors 10 direkt proportional. Bei kompressiblen Fluiden, beispielsweise Luft, ist der Zusammenhang von Fördermenge und Drehzahl zwar nicht linear, die absolute Fördermenge bzw. -masse steigt jedoch ebenfalls mit der Drehzahl.

Das spezifische Fördervolumen hängt von der Exzentrizität, also dem Abstand zwischen der zentralen Achse der Stellstruktur 20 und der Drehachse R des Förderrotors 10 ab. Um diesen Achsabstand ändern zu können, ist die Stellstruktur 20 im Gehäuse 1 rotatorisch beweglich angeordnet, beispielhaft um eine relativ zum Gehäuse 1 ortsfeste Polachse P bzw. Schwenkachse schwenkbeweglich. In Variationen kann eine modifizierte Stellstruktur im Gehäuse 1 auch um eine ortsveränderliche Polachse schwenkbeweglich angeordnet sein.

Ein Schwenklagerbereich der Stellstruktur 20 ist mit 21 bezeichnet. Die Schwenklagerung ist als Gleitlager ausgeführt, indem die Stellstruktur 20 in ihrem Schwenklagerbereich 21 mit einer Gegenfläche des Gehäuses 1 direkt in Gleitkontakt steht. Das Gehäuse 1 umfasst ein nicht dargestelltes Gehäuseteil, das die Stellstruktur 20 außen umgibt und die Gegenfläche des Gehäuses 1 bildet. Der in Figur 1 erkennbare Deckel des Gehäuses 1 schließt dieses weitere Gehäuseteil an einer axialen Stirnseite ab.

Die Stellstruktur 20 wird in eine erste Stellrichtung mit einer Federkraft F beaufschlagt. Die Federkraft F wird von einer Federeinrichtung 5 mit einem oder mehreren mechanischen Federgliedern, im Ausführungsbeispiel einem einzigen Federglied, erzeugt. Das Federglied ist als Schraubendruckfeder ausgeführt und angeordnet. Die Stellstruktur 20 wird der ersten Stellrichtung entgegen in eine zweite Stellrichtung mit einem Stelldruck eines Stellfluids beaufschlagt. Für die Druckbeaufschlagung mit dem Stellfluid ist am äußerem Umfang der Stellstruktur 20, der Federeinrichtung 5 über die Drehachse R gegenüberliegend eine Stelldruckkammer 6 gebildet, in die das Stellfluid mit dem vom Druck der Hochdruckseite der Rotationspumpe abhängigen Stelldruck einleitbar ist. Die Stellstruktur 20 bildet eine Kammerwand der Stelldruckkammer 6. Der auf diese Kammerwand wirkende Stelldruck erzeugt eine Fluidstellkraft, die der Federkraft F entgegenwirkt. Die Stellstruktur 20 nimmt eine dem momentanen Gleichgewicht aus Federkraft F und Fluidstellkraft entsprechende Schwenkposition ein. In Figur 1 nimmt die Stellstruktur 20 die dem maximalen spezifischen Fördervolumen entsprechende Position ein, d.h. die Exzentrizität der zentralen Längsachse der Stellstruktur 20 zur Drehachse R des Förderrotors 10 ist maximal.

Die Stelldruckkammer 6 wird mit dem von der Rotationspumpe geförderten Druckfluid gespeist, um die Stellstruktur 20 in die zweite Stellrichtung mit dem Stelldruck zu beaufschlagen. Die zweite Stellrichtung ist so gewählt, dass sich die Exzentrizität zwischen Förderrotor 10 und Stellstruktur 20 und dadurch das spezifische Fördervolumen verkleinert, wenn sich die Stellstruktur 20 in die zweite Stellrichtung bewegt.

Figur 2 zeigt die Stellstruktur 20 in einer Position für minimales spezifisches Fördervolumen. Im Ausführungsbeispiel sind die Verhältnisse so gewählt, dass die zentrale Längsachse der Stellstruktur 20 in dieser Position der Stellstruktur 20 mit der Drehachse R des Förderrotors 10 zusammenfällt und die Rotationspumpe kein Fluid fördert, da sich das Volumen der Förderzellen bei Drehung des Förderrotors 10 nicht ändert.

Die Stellstruktur 20 bildet mit einer nicht dargestellten Umfangswand des Gehäuses 1 einen in Umfangsrichtung erstreckten, radialen Dichtspalt 7, der die Stelldruckkammer 6 in die zweite Stellrichtung vom Niederdruckbereich des Gehäuses 1 trennt. Im radialen Dichtspalt 7 ist ein Dichtelement 24 zur besseren Abdichtung des Dichtspalts 7 angeordnet. Das Dichtelement 24 kann in einer Aufnahme der Stellstruktur 20 angeordnet sein.

In Bezug auf die Steuerung oder Regelung des Fördervolumens durch die erläuterte Beaufschlagung mit dem Stelldruck wird auf die US 8,814,544 B2 verwiesen, die diesbezüglich und auch zu weiteren Details der Funktionsweise der Rotationspumpe in Bezug genommen wird.

Anders als bei den bekannten Rotationspumpen ist die Federeinrichtung 5 jedoch nicht von der Polachse P über die Drehachse R gesehen seitlich neben dem Förderrotor 10 und der Förderkammer 2 angeordnet. Die Federkraft F kreuzt die Drehachse R auf der von der Polachse P abgewandten Seite in einem geringeren Abstand als bei den bekannten Rotationspumpen. Hierdurch wird die parallel zu einer Verbindungsgeraden von Polachse P und Drehachse R gemessene Breite der Rotationspumpe verringert.

Die Federeinrichtung 5 wirkt auf die Stellstruktur 20 in einem von der Stellstruktur 20 gebildeten Federwiderlager 22, das in axialer Sicht auf den Förderrotor 10 in Bezug auf eine orthogonal zur Federkraft F weisende Richtung mit dem Förderrotor 10 und der Förderkammer 2 überlappt. Die Federkraft F kreuzt die Drehachse R in der axialen Sicht innerhalb des dem Förderrotor 10 radial zugewandten Innenumfangs der Stellstruktur 20 und wie bevorzugt sogar noch innerhalb eines Außenumfangs der zentralen Rotorstruktur 11. Die Stellstruktur 20 kann aufgrund der quer zur Federkraft F überlappenden Anordnung des Federwiderlagers 22 und der Einleitung der Federkraft F mit verkürztem Hebel einer radial kompakten Ringform stärker angenähert werden, als es die aus dem Stand der Technik bekannten Stellstrukturen mit für die Einleitung der Federkraft radial abragendem Fortsatz zulassen.

Die Position für maximales Fördervolumen (Figur 1) und die Position für minimales Fördervolumen (Figur 2) werden jeweils durch einen Anschlagkontakt der Stellstruktur 20 mit einem relativ zum Gehäuse 1 nicht beweglichen Gehäuseanschlag 8 vorgegeben. Um die Stellstruktur 20 radial kompakt zu halten, sind ein erster Gegenanschlag 26 und ein zweiter Gegenanschlag 27 für den Gehäuseanschlag 8 in einer am äußeren Umfang der Stellstruktur 20 gebildeten Vertiefung 25 vorgesehen. Der Gehäuseanschlag 8 ragt in die Vertiefung 25. Die Gegenanschläge 26 und 27 werden von jeweils einer Seitenwand der Vertiefung 25 gebildet. Übersteigt das von der Federkraft F um die Polachse P erzeugte Drehmoment das vom Stelldruck um die Polachse P erzeugte Drehmoment, schwenkt die Stellstruktur 20 in die erste Stellrichtung, in den Figuren gegen den Uhrzeigersinn, bis der in Bezug auf die erste Stellrichtung nachlaufende erste Gegenanschlag 26 in die erste Stellrichtung in den Anschlagkontakt mit dem Gehäuseanschlag 8 gelangt. In Figur 1 ist dieser Anschlagkontakt hergestellt. Übersteigt das vom Stelldruck erzeugte Drehmoment das von der Federkraft F erzeugte Drehmoment schwenkt die Stellstruktur 20 in die zweite Stellrichtung, in den Figuren im Uhrzeigersinn, bis die Stellstruktur 20 mit dem in Bezug auf die zweite Stellrichtung nachlaufenden zweiten Gegenanschlag 27 in den Anschlagkontakt mit dem Gehäuseanschlag 8 gelangt. Diesen Zustand zeigt die Figur 2.

Der Gehäuseanschlag 8 kann als ein von einer Innenumfangsfläche des Gehäuses 1 radial in die Vertiefung 25 abragender Nocken geformt sein. Um die Umfangskontur des Gehäuses 1 so einfach wie möglich formen zu können, beispielsweise durch Gießformen, kann der Gehäuseanschlag 8 jedoch wie im Ausführungsbeispiel als ein Pin oder Bolzen gebildet sein, der von einer der Stellstruktur 20 axial zugewandten Stirnfläche des Gehäuses 1 abragt. Der Gehäuseanschlag 8 kann in einer derartigen Ausbildung insbesondere, wie im Ausführungsbeispiel, von einem die Stellstruktur 20 umgebenden Gehäuseteil oder von einem Deckel des Gehäuses 1 abragen. Ragt der Gehäuseanschlag 8 von einem Deckel des Gehäuses 1 ab, kann ein die Stellstruktur 20 am Umfang umgebendes Gehäuseteil vereinfacht werden.

Die Federeinrichtung 5 ist platzsparend in einem Zufluss 9 angeordnet, der einen Fluideinlass des Gehäuses 1 mit dem in die Förderkammer 2 mündenden Einlass 3 verbindet. Günstig ist, wenn die Federkraft F wie dargestellt in gerader Verlängerung eine Sekante des dem Innenumfang der Stellstruktur 20 entsprechend gekrümmten, nierenförmigen Einlasses 3 bildet. Der Zufluss 9 kann sich im Gehäuse 1 zum Einlass 3 hin in Richtung der Federkraft F längs der Federeinrichtung 5 erstrecken, um Strömungswiderstände zwischen dem Einlass in das Gehäuse 1 und dem in die Förderkammer 2 mündenden Einlass 3 zu verringern und die Förderkammer 2 auf der Niederdruckseite besonders gleichmäßig zu füllen. Der Zufluss 9 kann sich vom Einlass in das Gehäuse 1 insbesondere schneckenförmig in den Einlass 3 erstrecken.

### Bezugszeichen:

- 1: Gehäuse
- 2: Förderkammer
- 3: Einlass
- 4: Auslass
- 5: Federeinrichtung
- 6: Stelldruckkammer
- 7: Dichtspalt
- 8: Gehäuseanschlag
- 9: Zufluss
- 10: Förderrotor
- 11: Rotorstruktur
- 12: Flügel
- 13: Schlitz
- 14: -
- 15: Stützstruktur
- 16: -
- 17: -
- 18: -
- 19: -
- 20: Stellstruktur
- 21: Schwenklagerbereich, Lagerfläche
- 22: Federwiderlager
- 23: -
- 24: Dichtelement
- 25: Vertiefung
- 26: Gegenanschlag
- 27: Gegenanschlag

- F: Federkraft
- P: Polachse, Schwenkachse
- R: Drehachse

## Patentansprüche

1. Rotationspumpe mit verstellbarem spezifischen Fördervolumen, vorzugsweise Flügelpumpe, die Rotationspumpe umfassend:
(a) ein Gehäuse (1) mit einer Förderkammer (2), in die ein Einlass (3) und ein Auslass (4) für ein Fluid münden,
(b) einen in der Förderkammer (2) um eine Drehachse (R) drehbaren Förderrotor (10),
(c) eine den Förderrotor (10) umgebende Stellstruktur (20), die mit dem Förderrotor (10) Förderzellen (9) bildet, um das Fluid vom Einlass (3) zum Auslass (4) zu fördern, und zur Ausübung einer das spezifische Fördervolumen der Rotationspumpe verstellenden Stellbewegung relativ zum Förderrotor (10) in eine erste Stellrichtung und der ersten Stellrichtung entgegen in eine zweite Stellrichtung beweglich, vorzugsweise rotatorisch beweglich ist,
(d) eine Federeinrichtung (5), die zur Ausübung einer auf die Stellstruktur (20) in die erste Stellrichtung wirkenden Federkraft (F) in einem Federwiderlager (22) der Stellstruktur (20) abgestützt ist,
(e) eine Stelldruckkammer (6) zur Beaufschlagung der Stellstruktur (20) mit einem der Federkraft (F) entgegenwirkenden Stelldruck eines Stellfluids,
(f) und einen relativ zum Gehäuse (1) unbeweglichen Gehäuseanschlag (8), der eine Bewegung der Stellstruktur (20) in wenigstens eine der Stellrichtungen durch Anschlagkontakt mit der Stellstruktur (20) begrenzt,
(g) wobei die Stellstruktur (20) an einer dem Förderrotor (10) abgewandten Umfangswand eine radiale Vertiefung (25) und in der Vertiefung (25) einen Gegenanschlag (26), der in die erste Stellrichtung in den Anschlagkontakt mit dem Gehäuseanschlag (8) gelangt, und/oder einen Gegenanschlag (27), der in die zweite Stellrichtung in den Anschlagkontakt mit dem Gehäuseanschlag (8) gelangt, aufweist.

2. Rotationspumpe nach dem vorhergehenden Anspruch, wobei das Federwiderlager (22) in axialer Sicht auf den Förderrotor (10) orthogonal zur Federkraft (F) mit dem Förderrotor (10) überlappt.

3. Rotationspumpe nach einem der vorhergehenden Ansprüche, wobei eine in Bezug auf die durch den Anschlagkontakt begrenzte Stellbewegung nachlaufende Wand der Vertiefung (25) den Gegenanschlag (26; 27) bildet.

4. Rotationspumpe nach dem vorhergehenden Anspruch, wobei die Wand im Anschlagkontakt in einem Wandbereich, der den Gegenanschlag (26, 27) bildet, mit einer radial zur Drehachse (R) des Förderrotors (10) und/oder einer radial zu einer Schwenkachse der Stellstruktur (20) erstreckten Tangentialebene des Wandbereichs einen Winkel von höchstens 40°, vorzugsweise höchstens 30°, einschließt.

5. Rotationspumpe nach einem der vorhergehenden Ansprüche, wobei die Vertiefung (25) als axiale Nut am dem Förderrotor (10) radial abgewandten Umfang der Stellstruktur (20) geformt ist.

6. Rotationspumpe nach einem der vorhergehenden Ansprüche, wobei der Gehäuseanschlag (8) von einer der Stellstruktur (20) zugewandten Stirnfläche des Gehäuses (1) axial abragt, vorzugsweise stift- oder bolzenförmig.

7. Rotationspumpe nach einem der vorhergehenden Ansprüche, wobei die Stellstruktur (20) mit einer Innenumfangsfläche des Gehäuses (1) einen Dichtspalt (7) für die Stelldruckkammer (6) bildet und die Vertiefung (25) in Umfangsrichtung an den Dichtspalt (7) grenzt.

8. Rotationspumpe nach einem der vorhergehenden Ansprüche, wobei eine in Umfangsrichtung der Stellstruktur (20) vom vorlaufenden Ende bis zum nachlaufenden Ende gemessene Länge der Vertiefung (25) so klein ist, dass eine an die Stellstruktur (20) angelegte gerade Linie die Vertiefung (25) über ihre gesamte Länge überdeckt.

9. Rotationspumpe nach einem der vorhergehenden Ansprüche, wobei die Stellstruktur (20) in der Vertiefung (25) den Gegenanschlag (26), der in die erste Stellrichtung in den Anschlagkontakt mit dem in die Vertiefung ragenden Gehäuseanschlag (8) gelangt, und einen Gegenanschlag (27), der in die zweite Stellrichtung in den Anschlagkontakt mit dem in die Vertiefung ragenden Gehäuseanschlag (8) oder einem in die Vertiefung ragenden weiteren Gehäuseanschlag gelangt, aufweist.

10. Rotationspumpe nach einem der vorhergehenden Ansprüche, wobei die Federeinrichtung (5) ein Federglied, vorzugsweise eine Schraubendruckfeder, umfasst, das in Richtung auf die Förderkammer (2) und exzentrisch zur Drehachse (R) des Förderrotors (10) auf die Stellstruktur (20) wirkt; und/oder
die Federkraft (F) die Drehachse (R) des Förderrotors (10) in axialer Sicht auf den Förderrotor (10) innerhalb eines dem Förderrotor (10) zugewandten Innenumfangs der Stellstruktur (20) kreuzt; und/oder
die Federkraft (F) die Drehachse (R) des Förderrotors (10) an einer von der Polachse (P) abgewandten Seite kreuzt; und/oder
die Federeinrichtung (5) mit dem Förderrotor (10) parallel zur Federkraft (F) keine Überlappung aufweist.

11. Rotationspumpe nach einem der vorhergehenden Ansprüche, wobei die Stellstruktur (20) um eine Polachse (P), vorzugsweise eine relativ zum Gehäuse (1) ortsfeste Schwenkachse, in die erste Stellrichtung und die zweite Stellrichtung hin und her rotatorisch beweglich, vorzugsweise schwenkbeweglich ist.

12. Rotationspumpe nach einem der vorhergehenden Ansprüche, wobei die Stellstruktur (20) in einem Drehgelenk (1, 20) relativ zum Gehäuse (1) um eine relativ zum Gehäuse (1) ortsfeste Schwenkachse (P) in die erste Stellrichtung und die zweite Stellrichtung hin und her schwenkbeweglich ist.

13. Rotationspumpe nach einem der vorhergehenden Ansprüche, wobei das Federwiderlager (22) in axialer Sicht auf den Förderrotor (10) orthogonal zur Federkraft (F) mit dem Einlass (3) der Förderkammer (2) überlappt.

14. Rotationspumpe nach einem der vorhergehenden Ansprüche, wobei das Gehäuse (1) einen Einlass für das zu fördernde Fluid in das Gehäuse (1) und einen Zufluss (9) aufweist, der den Einlass in das Gehäuse (1) mit dem Einlass (3) der Förderkammer (2) verbindet und in axialer Sicht auf den Förderrotor (10) orthogonal zur Federkraft (F) mit dem Förderrotor (10) überlappt, und wobei sich die Federeinrichtung (5) im Zufluss (9) erstreckt.

15. Rotationspumpe nach einem der vorhergehenden Ansprüche, wobei die Rotationspumpe zur Versorgung eines Aggregats eines Kraftfahrzeugs mit dem Fluid verwendet und in fester Drehzahlbeziehung von einem Antriebsmotor des Fahrzeugs angetrieben wird, und wobei die Rotationspumpe eine Vakuumpumpe oder insbesondere eine Motorschmierölpumpe oder Getriebeölpumpe des Kraftfahrzeugs sein kann.
